# EUROPÄISCHE PATENTSCHRIFT

(11) **EP 0 576 458 B1**
(45) Veröffentlichungstag und Bekanntmachung des Hinweises auf die Patenterteilung: **02.08.1995**
(21) Anmeldenummer: 92905915.2
(22) Anmeldetag: 10.03.1992
(51) Int. Cl.: G11B 20/00, G11B 5/86, H04N 5/91

(54) **AUFNAHME- UND/ODER KOPIERSYSTEM**
RECORDING AND/OR COPYING SYSTEM
SYSTEME D'ENREGISTREMENT ET/OU DE COPIE

(30) Priorität: 18.03.1991 DE 4108728
(43) Veröffentlichungstag der Anmeldung: 05.01.1994
(73) Patentinhaber: DEUTSCHE THOMSON-BRANDT GMBH, 78048 Villingen-Schwenningen (DE)
(72) Erfinder: PLATTE, Hans-Joachim, D-3005 Hemmingen 4 (DE); PETERS, Hartmut, D-3013 Barsinghausen (DE); KEESEN, Heinz-Werner, D-3000 Hannover 1 (DE)
(74) Vertreter: Einsel, Robert, Dipl.-Ing.
(86) Internationale Anmeldenummer: EP9200522
(87) Internationale Veröffentlichungsnummer: WO9216944

(56) Entgegenhaltungen:
- EP-A- 0 297 242
- EP-A- 0 328 141
- DE-A- 3 832 398
- US-A- 4 112 445
- US-A- 4 663 674

## Beschreibung

Bei dem Digital Audio Tape (DAT) Standard und der zur digitalen Verbindung zwischen mehrerer Geräten verwendeten sog.

AES/EBU-Schnittstelle ist eine Quellenidentifikation vorgesehen, die im Rahmen des standardisierten 'Serial Copy Management System' (SCMS) von DAT zur Kontrolle aller Aufnahme- und/oder Kopiervorgänge genutzt wird.

Desweiteren sind bei VHS und S-VHS-Videorecordern analoge Lösungen in Anwendung bzw. Untersuchung, bei denen die Signale auf vorbespielten Kassetten so gegenüber dem genormten Standard modifiziert sind, daß sie beim Versuch der Überspielung auf einen standardmäßigen Rekorder dessen Synchronisationssysteme beeinflussen oder die Farbdeckungen zerstören o.ä. Diese Systeme, die unlizensierte Kopien verhindern sollen, können jedoch durch relativ einfache Zusatzgeräte unwirksam gemacht werden.

Ein System zur Kontrolle von Aufnahme - und/oder Kopiervorgängen gemäß dem Oberbegriff des Anspruchs 1 wird in EP-A-0 328 141 offenbart.

Der Erfindung liegt die Aufgabe zugrunde, ein Aufnahme- und/oder Kopiersystem anzugeben, das eine sichere Kontrolle von Aufnahmevorgängen bewirkt.

Diese Aufgabe wird durch die im Patentanspruch 1 angegebenen Merkmale gelöst. Vorteilhafte Weiterbildungen ergeben sich aus den Unteransprüchen.

Erfindungsgemäß werden Zusatzsignale verwendet, die z.B. als digitale Nebeninformation, sogenannte Subcodes, zusätzlich zu den Bild- und Tonsignalen auf Band aufgezeichnet werden. Durch das Zusatzsignal wird die Bandaufnahme bzw. die Videokassette bezüglich ihrer originären Quelle identifizierbar gemacht. Über diese Information kann durch entsprechende Steuerung aller gegebenenfalls nachfolgender Videorekorder die Einhaltung von Kopierbeschränkungen, z. B. durch Copyright, und die Vermeidung unerlaubter Kopiervorgänge sichergestellt werden. Aus der Dekodierung der Zusatzsignale ist erkennbar und z.B. unterscheidbar,
- ob die Kassette vom Besitzer selbst mit einer Kamera bzw. einem Kamerarekorder aufgezeichnet worden ist und daher vermutlich frei von Kopiereinschränkungen ist, oder
- ob die Kassette aus einem Kopierwerk stammt, und daher vermutlich einer Kopierbeschränkung unterliegt, oder
- ob die Kassette über den Tuner-Eingang eines Videorekorders aufgenommen worden ist, und daher gegebenenfalls zum privaten Gebrauch ohne Einschränkungen kopierbar ist.

Bei dem erfindungsgemäßen System zur Kontrolle von Aufnahme- und/oder Kopiervorgängen, insbesondere für Videorekorder und Kamerarekorder sowie in Verbindung mit digitaler Aufzeichnung auf Band, werden bei der Aufzeichnung von Bild- und/oder Tonsignalen Zusatzsignale auf Band aufgezeichnet, welche codierte Informationen über die Quelle enthalten, aus der die aufzuzeichnenden Signale stammen.

Vorzugsweise werden die Zusatzsignale mit den Informationen über die Signalquelle getrennt oder gemeinsam für das Ton- und Bildsignal aufgezeichnet.

Beispielsweise zeichnet ein erfindungsgemäßer Kamerarekorder -Kombinationsgerät aus Videokamera und Videoaufzeichnungsgerät- bei Aufnahme mit der Kamera zusätzlich zu den Bild- und/oder Tonsignalen automatisch Zusatzsignale mit einer fest vorgegebenen Codierung auf Band auf, die diese Aufnahme als von einem Kamerarekorder stammend identifizierbar macht.

Bei einem erfindungsgemäßen Videorekorder mit mehreren Eingängen werden bei der Aufnahme zusätzlich zu den Bild- und/oder Tonsignalen automatisch Zusatzsignale mit einer vom jeweils benutzten Eingang abhängigen Codierung aufgezeichnet, die diese Aufnahme bezüglich des benutzten Einganges identifizierbar macht.

Bei einem erfindungsgemäßen Videorekorder, dem zur Aufzeichnung Bild- und/oder Tonsignale zugeführt werden, welche bereits Zusatzsignale mit einer quellenabhängigen Codierung enthalten, werden diese zur Steuerung von Aufnahmeparametern benutzt. Zusätzlich können diese Zusatzsignale nach festgelegten Regeln und in Abhängigkeit von dem jeweils benutzten Eingang modifiziert auf Band aufgezeichnet werden.

Eine unveränderte Aufzeichnung auf Band ist zur Quellidentifikation ebenfalls möglich.

Im Wiedergabemodus eines erfindungsgemäßen Videorekorders werden an den jeweiligen Ausgängen die von Band gelesenen Zusatzsignale gemeinsam mit den Bild- und/oder Tonsignalen ausgegeben.

Vorteilhaft können bei einem erfindungsgemäßen Videorekorder Einrichtungen vorhanden sein, mit denen Bild- und/oder Tonsignale an einem Eingang auf die zugehörigen Zusatzsignale zur Quellenidentifikation analysiert werden können.

Mit dem erfindungsgemäßen Aufnahme- und/oder Kopiersystem wird vorteilhaft eine automatische Erzeugung von codierten Zusatzsignalen, welche später von Band die Quelle- oder den benutzten Eingang/Eingangsstandard identifizierbar machen, erzeugt.

Diese für automatisch prozessierbare Kennungen auf dem Videoband abgelegten Zusatzsignale dienen einer Vielzahl von denkbaren Anwendungen und Fällen zur anpaßbaren automatischen Steuerung und Kontrolle von Kopier-, Editier-, Aufnahme- und Wiedergabefunktionen.

Die erfindungsgemäße Lösung ist einsetzbar in künftigen digitalen Videorekordern mit diversen Eingängen, wie z.B. PAL-Tuner, Satelliten-Tuner, HD-MAC, SCART, golden SCART, dig. Überspieleingang, Video-Disk oder einem digitalen Kamerarekorder. Es werden automatisch Informationen über den Eingang und/oder die Quelle der aufzuzeichnenden Videosignale und/oder den jeweiligen Standard auf Band aufgezeichnet, und diese Informationen werden bei Wiedergabe an allen Ausgängen verbunden mit dem Videosignal wieder ausgegeben. Falls bei einem Videorecorder bereits ein mit Codierung versehenes Signal zur Aufzeichnung an einem Eingang ansteht, wird die darin enthaltene Codierung ausgewertet und vorzugsweise zur Steuerung von Aufnahmeparametern an dem Rekorder benutzt und entweder unverändert oder nach bestimmten Regeln modifiziert auf dem aufzunehmenden Band wieder aufgezeichnet. Zum Beispiel könnte erfindungsgemäß ein von einer Videodisk stammendes Signal grundsätzlich eine Aufnahmesperrung auslösen, während andere Signale eingeschränkt oder frei wieder aufgenommen werden könnten.

Im Beispiel der Videodisk könnte beispielsweise auch eine einmalige Kopie auf Band erlaubt sein, wobei die codierte Zusatzinformation von der Videodisk modifiziert auf Band aufgezeichnet wird und erst später einen weiteren Kopierversuch von dem kopierten Band verhindern würde.

Durch die erfindungsgemäße Lösung wird eine hohe Flexibilität von logischer Fallunterscheidung auf Basis der Quelleninformation zur Steuerung von Gerätefunktionen und zur Sicherstellung einer eventuellen Kopiersperre erreicht. Neben der Kopiersperre könnte ein intelligenter Videorekorder z.B. bei Eingangssignalen geringerer technischer Qualität (z.B. PAL, SECAM) auf eine geringere Aufzeichnungsqualität (z.B. im Longplay) schalten und bei HDTV Eingangssignalen z.B. auf Normalgeschwindigkeit.

Ein weiterer Vorteil liegt in der konsequenten und im existierenden Standard festgelegten Implementierung des vorgeschlagenen Systems in eine völlig neue Gerätegeneration (digitale Videorekorder). Hiermit läßt sich ein Teil der Probleme heutiger Kopierschutzsysteme, die stets auch mit alten Rekordern arbeiten müssen, vermeiden.

Die Erfindung wird im folgenden anhand der Zeichnung erläutert. Darin zeigen:
- Fig. 1: Kopierschutz bei einer Aufnahme mittels eines Kamerarekorders,
- Fig. 2: Kopierschutz bei einer gekauften Kassette,
- Fig. 3: Kopierschutz bei einer geliehenen Kassette,
- Fig. 4: Kopierschutz bei einer Aufnahme mittels eines Tischrekorders.

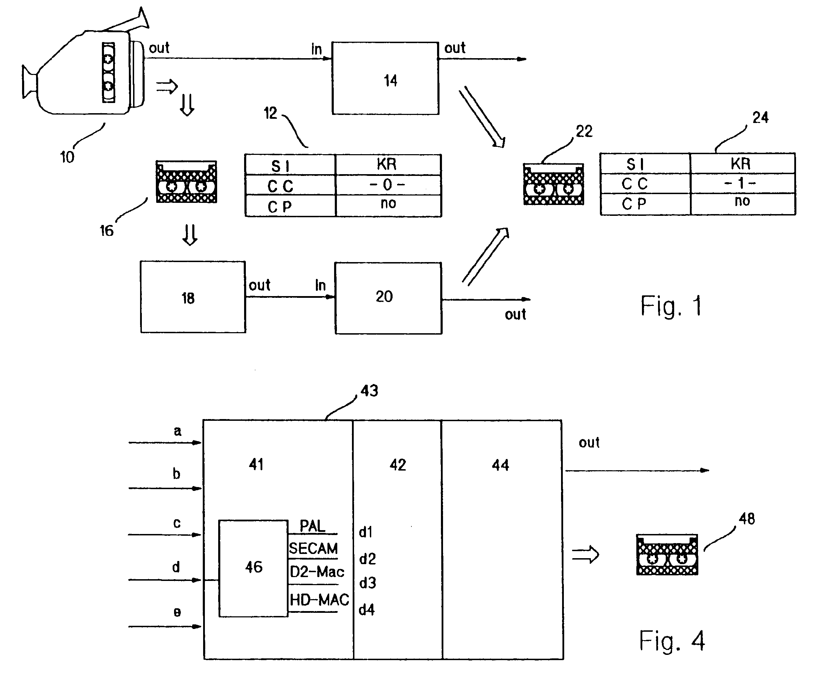

Fig. 1 zeigt ein Beispiel eines Kopierschutzes bei einer Aufnahme mittels eines Kamerarekorders 10. Das Ausgangssignal des Kamerarekorders 10 kann z. B. über eine Ausgangsschnittstelle einem digitalen Videorekorder 14 zugeführt oder direkt auf eine Kassette 16 aufgezeichnet werden. Das dem Videorecorder 14 zugeführte Signal des Kamerarekorders 10 kann auf einer Kassette 22 gespeichert werden. Dem Signal wird erfindungsgemäß ein Subcode 12 sowohl auf das Band 16 aufgezeichnet als auch an den Ausgang des Kamerarekorders 10 gegeben. Der Subcode 12 enthält beispielsweise als Quellenidentifikation SI=KR für den Kamerarekorder 10. Ein im Subcode 12 enthaltener Kopierzähler CC enthält den Wert 0. Als Kopierschutzinformation CP ist für den Kamerarekorder 10 der Wert "no" eingesetzt. Durch diese Kopierschutzinformation CP="no" ist eine beliebige Vervielfältigung gestattet. So kann die Kassette 16 über einen weiteren digitalen Videorekorder 18 wiedergegeben und von einem dritten Videorekorder 20 auf die Kassette 22 aufgezeichnet werden. Der von den Videorecorden 14, 20 aufgezeichnete Subcode 24 ist mit dem von dem Kamerarekorder 10 erzeugte Subcode 12 nahezu identisch. Vorzugsweise werden bei jedem Kopiervorgang der Wert des Kopierzählers CC um "1" erhöht.

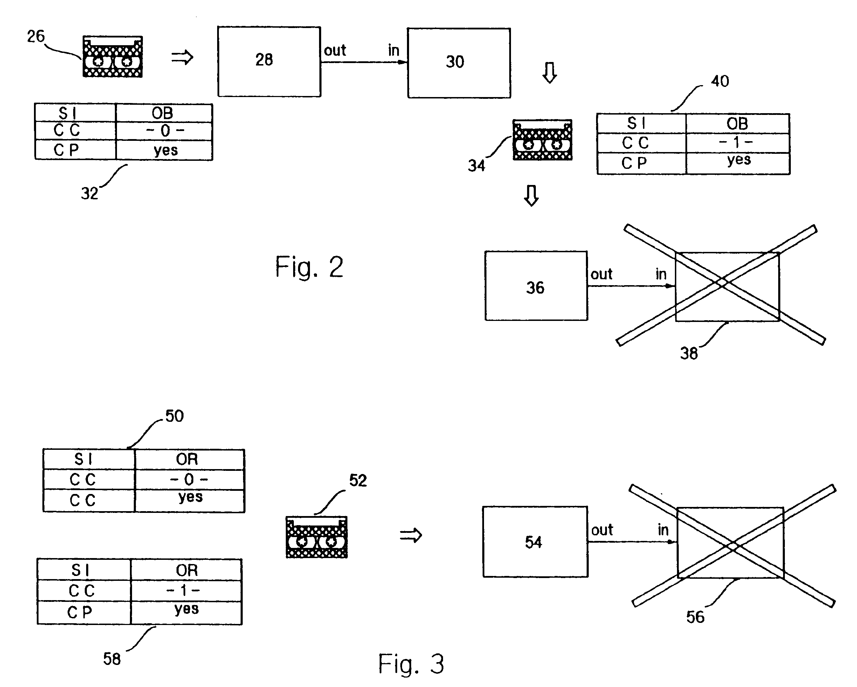

Fig. 2 zeigt ein Beispiel für einen Kopierschutz bei einer gekauften, vorbespielten Kassette 26. Diese Kassette 26 enthält neben der Programminformation einen Subcode 32 mit z. B. einer Quellenidentifikation SI=OB für die Kennzeichnung, daß es sich um eine gekaufte, vorbespielte Kassette 26 handelt. Der Kopierzähler CC ist auf "O" gesetzt, die Kopierschutzinformation CP auf "yes". Eine so gekennzeichnete Kassette 26 kann über einen Videorekorder 28 wiedergegeben und es kann eine Sicherungskopie 34 mittels eines Videorekorders 30 angefertigt werden. Die Sicherungskopie 34 enthält dann einen Subcode, bei dem der Kopierzähler auf "1" gesetzt ist. Eine weitere Kopie von der Sicherungskopie 34 mittels eines weiteren Videorekorders 36, 38 ist dann nicht mehr möglich.

Fig. 3 zeigt ein Beispiel für einen Kopierschutz bei einer geliehenen, vorbespielten Kassette 52. Diese Kassette 52 enthält neben der Programminformation einen Subcode 50 oder 58 mit z. B. einer Quellenidentifikation SI=OR für die Kennzeichnung, daß es sich um eine geliehene, vorbespielte Kassette 52 handelt. Der Kopierzähler CC ist auf "0" oder "1" gesetzt, die Kopierschutzinformation CP auf "yes". Eine so gekennzeichnete Kassette 52 kann über einen Videorekorder 54 wiedergegeben werden. Eine Sicherungskopie mittels eines Videorekorders 56 kann nicht angefertigt werden.

Fig. 4 zeigt einen Kopierschutz bei einer Aufnahme mittels eines digitalen Videorekorders 43. Der Videorekorder 43 kann z. B. Eingänge a bis e aufweisen, wobei der Eingang a ein Kameraeingang, Eingang b ein Scart-Eingang, Eingang c ein Scart-Eingang für HDTV-Signale, Eingang d ein Antenneneingang und Eingang e ein Eingang für ein Bildplattensignal darstellt. In einen Eingangsteil 41 des Videorekorders 43 werden die Eingänge a bis e einem Tuner und Demodulator 46 zugeführt, an dessen Ausgängen d1 bis d4 z. B. TV-Signale unterschiedlicher Normen abgreifbar sind. Diese Ausgänge dl bis d4 werden einer Eingangsselektionsstufe 42 des Videorekorders 43 zugeführt. An diese Eingangsselektionsstufe 42 schließt sich eine Aufnahme- und Wiedergabestufe 44 an, die eine digitale Schnittstelle out aufweist. Aufgezeichnete Informationen sind auf einer Kassette 48 gespeichert. Diese Kassette 48 und die digitale Schnittstelle out enthalten einen Subcode, wie er in den Fig. 1 - 3 beschrieben ist. So kann die Quellenidentifikation SI die Information über die verschiedenen Eingänge des Videorekorders 43 und/oder die Demodulationsart enthalten. Der Stand des Kopierzählers ist von dem Eingangstand abhängig, ebenso die Kopierschutzinformation.

Der Videorekorder 43 wird bei der Kopie einer Aufnahme den vorhandenen Quellenidentifikationscode SI kopieren. Falls keine Quellenidentifikation SI vorhanden ist, wird dieser, abhängig von der aufzuzeichnenden Quelle, von dem Videorekorder 43 erzeugt.

## Patentansprüche

1. System zur Kontrolle von Aufnahme- und/oder Kopiervorgängen bei Videorekordern (14) oder Kamerarekordern (10), bei dem bei der Aufzeichnung von - insbesondere digitalen - Bild- und/oder Tonsignalen, Zusatzsignale (12, 24) auf Band aufgezeichnet werden, welche zusätzlich codierte Informationen über die Art der Aufzeichnung enthalten, **dadurch gekennzeichnet,** daß die Zusatzsignale eine Information enthalten über die Qualität der Original-Quelle, aus der die aufzuzeichnenden Signale stammen und daß der Video- oder Kamerarekorder automatisch auf eine Aufzeichnungsqualität entsprechend der Qualität der Original-Quelle umschaltet, insbesondere unter Berücksichtigung der Kopie-Generation (CC).

2. System nach Anspruch 1, **dadurch gekennzeichnet,** daß ein Videorekorder mit mehreren Eingängen (a-e) bei Aufnahme zusätzlich zu den Bild- und/oder Tonsignalen automatisch Zusatzsignale mit einer vom jeweils benutzten Eingang abhängigen Codierung aufzeichnet, die diese Aufnahme bezüglich des benutzten Einganges identifizierbar macht.

3. System nach Anspruch 1 oder 2, **dadurch gekennzeichnet,** daß ein Videorekorder, dem zur Aufzeichnung Bild- und/oder Tonsignale zugeführt werden, welche bereits Zusatzsignale mit einer quellenabhängigen Codierung enthalten, diese zur Steuerung von Aufnahmeparametern benutzt.

4. System nach Anspruch 1 oder 2, **dadurch gekennzeichnet,** daß ein Videorekorder, dem zur Aufzeichnung Bild- und/oder Tonsignale zugeführt werden, welche bereits Zusatzsignale mit einer quellenabhängigen Codierung enthalten, diese nach festgelegten Regeln und in Abhängigkeit von dem jeweils benutzten Eingang (a-e) modifiziert auf Band aufzeichnet.

5. System nach einem oder mehreren der Ansprüche 1 bis 4, **dadurch gekennzeichnet,** daß bei jeder weiteren Kopie-Generation ein entsprechender Wert (CC) in den Zusatzsignalen incrementiert wird.

## Claims

1. A system for the checking of recording and/or copying processes in video recorders (14) or camcorders (10), in which during the recording of - especially digital - picture and/or sound signals, auxiliary signals (12,14), which contain additional coded items of information regarding the type of recording are recorded on the tape, characterised in that the auxiliary signals contain an item of information relating to the quality of the original source from which originate the signals to be recorded and that the video - or camcorder automatically switches over to a recording quality corresponding to the quality of the original source, especially taking into account the copy generation (CC).

2. A system according to claim 1, characterised in that a video recorder having a plurality of inputs (a-e) when recording, automatically records, in addition to the picture and/or sound signals, auxiliary signals having a coding that is dependent on the respective used input and that renders this recording identifiable with respects to the used input.

3. A system according to claim 1 or 2, characterised in that a video recorder, to which picture and/or sound signals that already contain auxiliary signals having a source dependent coding are supplied for the recording, uses these for the control of recording parameters.

4. A system according to claim 1 or 2, characterised in that, a video recorder, to which picture and/or sound signals that already contain auxiliary signals having a source dependent coding are supplied for the recording, modifies these in accordance with predetermined rules and in dependence on the respective used input (a-e) and records them on the tape.

5. A system according to one or more of claims 1 to 4, characterised in that for each further copy generation a corresponding value (CC) in the auxiliary signals is incremented.

## Revendications

1. Système de contrôle des opérations d'enregistrement et/ou de copie en association avec un magnétoscope (14) ou caméscope (10), où des signaux complémentaires (12, 24 ) sont enregistrés sur la bande en même temps que les signaux vidéo et/ou audio - notamment numériques -, lesquels signaux complémentaires contiennent des informations codées supplémentaires concernant le mode d'enregistrement, système **caractérisé en ce** que lesdits signaux complémentaires comportent une information sur la qualité de la source originale dont proviennent les signaux à enregistrer, et que le magnétoscope ou le caméscope se règle automatiquement sur le mode d'enregistrement correspondant à la qualité de la source originale, et ce notamment compte tenu de la génération de copies (CC).

2. Système selon la revendication 1 **caractérisé en ce** qu'un magnétoscope comportant plusieurs entrées (a-e) enregistre automatiquement, outre les signaux vidéo et/ou audio, des signaux complémentaires contenant un codage en fonction de l'entrée utilisée, qui permet d'identifier l'enregistrement par rapport à l'entrée utilisée.

3. Système selon l'une quelconque des revendications 1 ou 2 **caractérisé en ce** qu'un magnétoscope recevant des signaux vidéo et/ou audio qui comportent déjà des signaux complémentaires contenant un codage spécifiant la source, utilise ces derniers pour la commande des paramètres d'enregistrement.

4. Système selon l'une quelconque des revendications 1 ou 2 **caractérisé en ce** qu'un magnétoscope recevant des signaux vidéo et/ou audio qui comportent déjà des signaux complémentaires contenant un codage spécifiant la source, enregistre ces derniers sur bande sous une forme modifiée, et ce selon des règles définies et en fonction de l'entrée utilisée (a-e).

5. Système selon l'une ou plusieurs des revendications 1 à 4 **caractérisé en ce** qu'à chaque nouvelle génération de copie, une valeur correspondante (CC) est incrémentée dans lesdits signaux complémentaires.
